# EUROPEAN PATENT SPECIFICATION

(11) **EP 3 445 032 B1**
(45) Date of publication and mention of the grant of the patent: **20.10.2021**
(21) Application number: 17781837.4
(22) Date of filing: 07.04.2017
(51) Int. Cl.: H04N 5/225, B60R 11/04, G08B 13/196

(54) **VIDEO CAMERA**
VIDEOKAMERA
CAMÉRA VIDÉO

(30) Priority: 11.04.2016 CN 201610220656
(43) Date of publication of application: 20.02.2019
(73) Proprietor: Robert Bosch Smart Home GmbH, 70565 Stuttgart-Vaihingen (DE)
(72) Inventor: CHOU, Chia-Hung, Taipei Taiwan 10491 (CN); LIANG, Hsiao-Lung, Taipei Taiwan 10491 (CN)
(74) Representative: Isarpatent
(86) International application number: PCT/CN2017/079696
(87) International publication number: WO 2017/177861

(56) References cited:
- EP-A1- 1 583 353
- CN-U- 201 657 118
- CN-U- 203 883 916
- CN-U- 203 951 540
- CN-U- 205 081 858
- CN-Y- 2 717 138
- CN-Y- 2 899 315
- DE-A1-102013 112 073
- US-A- 4 510 526
- US-A1- 2006 033 832

## Description

### Technical field

The present invention relates to security surveillance equipment and intelligent household electrical appliance equipment, in particular to a camera.

### Background art

Cameras are widely used as security surveillance equipment in all kinds of public and private places, including airports, hotels and residences. Cameras are also widely used in intelligent household electrical appliance systems. In order to be able to scan a large range and thereby expand the camera's surveillance range, cameras such as PTZ (Pan/Tilt/Zoom) cameras can make a camera head move up and down and rotate horizontally, to enable the camera to shoot from multiple angles. In an existing camera capable of making a camera head move up and down and rotate horizontally, two electric motors are generally used to drive one corresponding type of movement respectively, i.e. one electric motor is used to drive up/down movement of the camera head, and the other electric motor is used to drive horizontal rotation of the camera head. Using two electric motors to drive up/down movement and horizontal rotation of the camera head respectively makes control of the camera more complicated; the two individual electric motors will also significantly increase the size and cost of the camera. EP1583353 disclosing an automatic camera lens module retracting and extending from a mobile phone in a longitudinal direction for a predetermined length.

US2006/033832 disclosing a pop-up camera module using protrusion and recess to rotate the outer surface of a guide cylinder.

Thus, there is a need to improve an existing camera.

### Content of the invention

An object of the present invention is to overcome at least one shortcoming in the prior art described above, and propose an improved camera, which uses a single electric motor to drive up/down movement and horizontal rotation of a camera head, making control of the camera simpler; moreover, the single electric motor will significantly reduce the size and cost of the camera.

To this end, according to the appended claims, a camera is provided, comprising:
a base;
a cylindrical hollow main body mounted to the base;
an electric motor supported on a support, with an external gear being mounted on an output shaft of the electric motor;
a camera head assembly, being capable of moving up and down relative to the hollow main body and thus having an extended state and a concealed state, and being capable of rotating horizontally in the extended state, the camera head assembly comprising a cylindrical housing, a lens module disposed at least partially in the cylindrical housing, and a motherboard for controlling the electric motor and the lens module; and
an internal gear meshed with the external gear;
characterized in that one of the support supporting the electric motor and the internal gear is mounted in a fixed manner to the base or in the hollow main body, and the other one of the support supporting the electric motor and the internal gear is mounted in a fixed manner to the camera head assembly; and
an annular groove and at least one helical groove extending upward from the annular groove are formed on an outer wall of a lower-half part of the cylindrical housing of the camera head assembly, a corresponding circular guiding protrusion is disposed on an inner wall of the hollow main body, and each said circular guiding protrusion is capable of being received in the annular groove or in the corresponding helical groove, such that up/down movement of the camera head assembly relative to the hollow main body and horizontal rotation of the camera head assembly can be driven by the electric motor alone.

In the camera according to the present invention, since the annular groove and the helical groove meeting the annular groove are disposed on the cylindrical housing of the camera head assembly, while the circular guiding protrusion received in the corresponding groove is disposed on the inner wall of the cylindrical hollow main body, the camera head assembly can be driven by a single electric motor to move up and down and rotate horizontally, making control of the camera simpler; moreover, the single electric motor will significantly reduce the size and cost of the camera.

### Description of the accompanying drawings

Fig. 1 is an exploded three-dimensional drawing of a camera according to a first preferred embodiment of the present invention.
Fig. 2 is a side view of the camera according to the first preferred embodiment of the present invention, wherein the camera head assembly is in the concealed state.
Fig. 3 is a sectional view along line 3-3 in fig. 2.
Fig. 4 is a side view of the camera according to the first preferred embodiment of the present invention, wherein the camera head assembly is in the extended state.
Fig. 5 is a sectional view along line 5-5 in fig. 4.
Fig. 6 is a partial sectional three-dimensional drawing of the camera according to the first preferred embodiment of the present invention with the hollow main body removed.
Fig. 7 is a three-dimensional drawing of the camera head assembly of the camera according to the first preferred embodiment of the present invention, viewed from one side.
Fig. 8 is a three-dimensional drawing of the camera head assembly of the camera according to the first preferred embodiment of the present invention, viewed from another side.
Fig. 9 is an enlarged three-dimensional drawing of the guide ring of the camera according to the first preferred embodiment of the present invention.
Fig. 10 is a three-dimensional drawing of the camera according to the first preferred embodiment of the present invention, wherein the camera head assembly is in the extended state and has been rotated horizontally to a predetermined initial position.
Fig. 11 shows schematically in a partial three-dimensional drawing a maximum scanning range when the camera head assembly rotates to one side relative to the predetermined initial position.
Fig. 12 shows schematically in a partial three-dimensional drawing a maximum scanning range when the camera head assembly rotates to the other side relative to the predetermined initial position.
Fig. 13 is a partial three-dimensional drawing of the camera according to the first preferred embodiment of the present invention, wherein the camera head assembly is in the extended state and the hollow main body is shown in a transparent fashion so as to reveal the interior structure of the camera.
Fig. 14 is a similar schematic drawing to fig. 13, showing the camera head assembly changing from the extended state to the concealed state.
Fig. 15 is an exploded three-dimensional drawing of a camera according to a second preferred embodiment of the present invention.
Fig. 16 is a side view of the camera according to the second preferred embodiment of the present invention, wherein the camera head assembly is in the concealed state.
Fig. 17 is a sectional view along line 17-17 in fig. 16.
Fig. 18 is a side view of the camera according to the second preferred embodiment of the present invention, wherein the camera head assembly is in the extended state.
Fig. 19 is a sectional view along line 19-19 in fig. 18.
Fig. 20 is a partial sectional three-dimensional drawing of the camera according to the second preferred embodiment of the present invention with the hollow main body removed.
Fig. 21 is a sectional three-dimensional drawing of the camera according to the second preferred embodiment of the present invention.
Fig. 22 is a partial three-dimensional drawing of the camera according to the second preferred embodiment of the present invention, wherein the camera head assembly is in the extended state and the hollow main body is shown in a transparent fashion so as to reveal the interior structure of the camera.
Fig. 23 is a similar schematic drawing to fig. 22, showing the camera head assembly changing from the extended state to a concealed state.

### Particular embodiments

Preferred embodiments of the present invention are described in detail below with reference to examples. Those skilled in the art should understand that these demonstrative embodiments do not imply any limitation of the present invention.

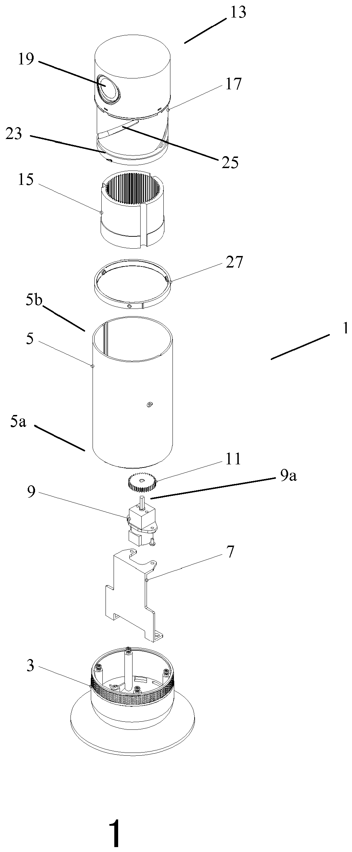

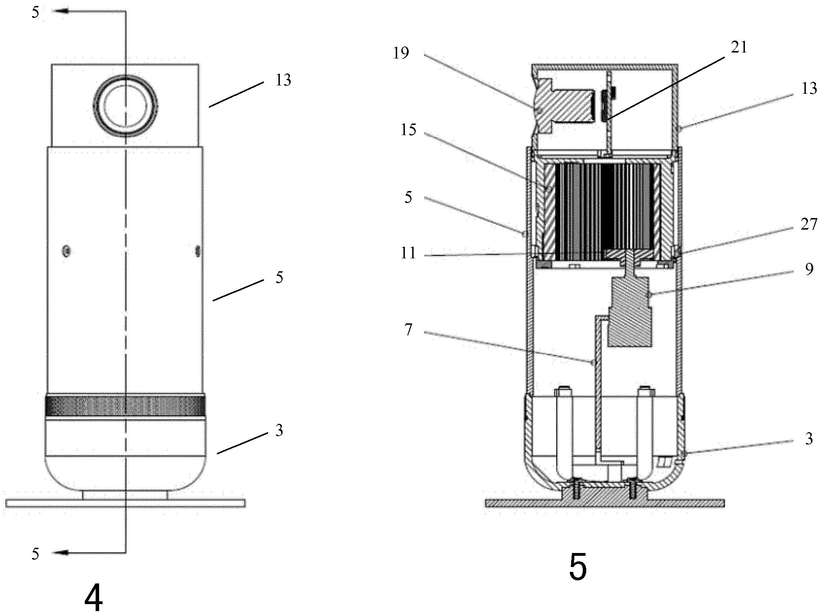

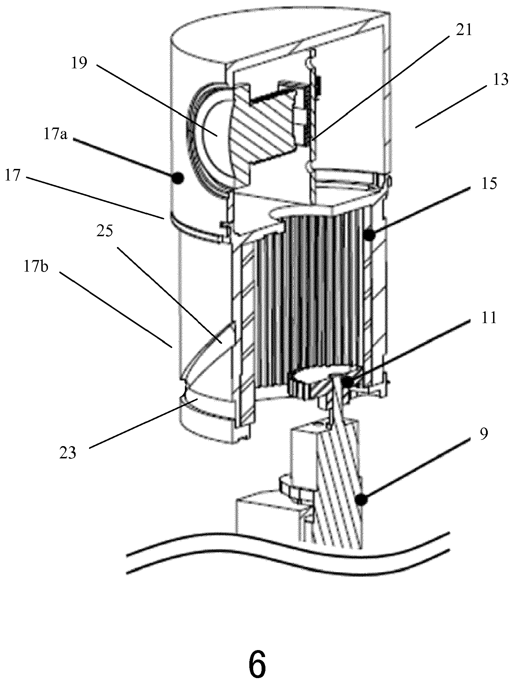

As shown in figs. 1 - 6, a camera 1 according to a first preferred embodiment of the present invention comprises a base 3; a cylindrical hollow main body 5 which, at a lower end 5a, is mounted to the base 3 for example by the mating of screw-threads; a support 7 mounted in a fixed manner to the base 3 and located in the hollow main body 5; an electric motor 9 supported on the support 7 and located in the hollow main body 5; an external gear 11 mounted to an output shaft 9a of the electric motor 9; a substantially cylindrical camera head assembly 13; and an internal gear 15 mounted to the camera head assembly 13 and meshed with the external gear 11.

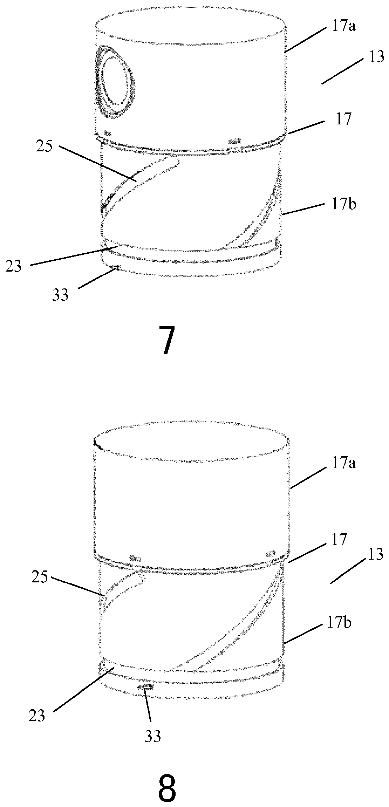

In the first preferred embodiment, the camera head assembly 13 comprises a cylindrical housing 17; inside an upper-half part 17a of the cylindrical housing 17 are mounted a lens module 19 for taking pictures and a motherboard 21 for controlling the electric motor 9 and the lens module 19; a lower-half part 17b of the cylindrical housing 17 is hollow. In a preferred embodiment the internal gear 15 is tightly fixed to the hollow interior of the lower-half part 17b of the cylindrical housing 17, for example by means of an interference fit; however, the internal gear 15 could be formed integrally with the lower-half part 17b of the cylindrical housing 17. An annular groove 23 is formed on an outer wall of the lower-half part 17b of the cylindrical housing 17, close to a lower end; a helical groove 25 extending upward from the annular groove 23 is also formed on the outer wall of the lower-half part 17b of the cylindrical housing 17. Fig. 7 is a three-dimensional drawing of the camera head assembly of the camera according to the first preferred embodiment of the present invention, viewed from one side; fig. 8 is a three-dimensional drawing of the camera head assembly of the camera according to the first preferred embodiment of the present invention, viewed from another side. As shown in the preferred embodiment in figs. 7 and 8, three uniformly distributed helical grooves 25 are formed on the outer wall of the lower-half part 17b of the cylindrical housing 17; however, it should be understood that there could be one, two or three helical grooves 25 extending upward from the annular groove 23.

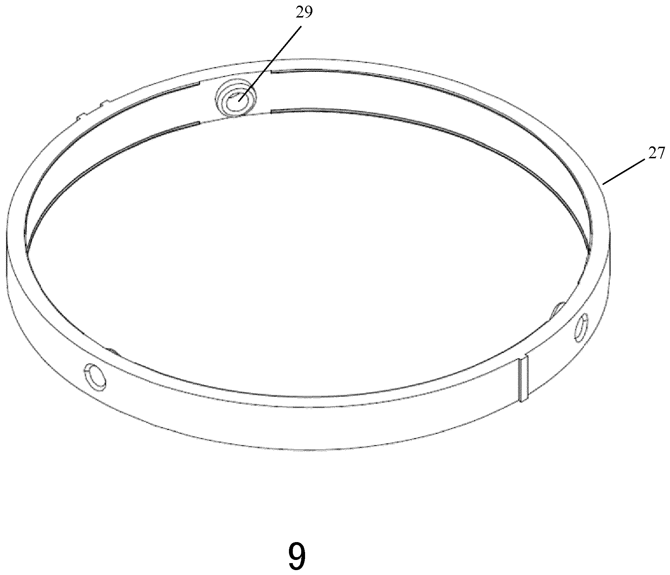

The camera 1 according to the first preferred embodiment of the present invention further comprises a guide ring 27 mounted in a fixed manner to an inner wall of the hollow main body 5. Fig. 9 is an enlarged three-dimensional drawing of the guide ring 27 of the camera according to the first preferred embodiment of the present invention. As shown in fig. 9, the guide ring 27 is circular, and comprises a circular guiding protrusion 29 formed on an inner wall of the guide ring 27. It should be understood that the number of circular guiding protrusions 29 is the same as the number of helical grooves 25 on the outer wall of the lower-half part 17b of the cylindrical housing 17; hence, in a preferred embodiment, the guide ring 27 is shown as having three uniformly distributed circular guiding protrusions 29. The three uniformly distributed circular guiding protrusions 29 are located at the same height on the outer wall of the lower-half part 17b of the cylindrical housing 17. In a preferred embodiment the circular guiding protrusions 29 are shown as being formed on the guide ring 27, which is separate from the hollow main body 5 and mounted to the hollow main body 5 in an internally fixed manner; however, it should be understood that the circular guiding protrusions 29 could also be formed directly on the inner wall of the hollow main body 5. For example, when the hollow main body 5 is an injection-moulded member, the circular guiding protrusions 29 are formed integrally with the hollow main body 5 in the course of injection moulding.

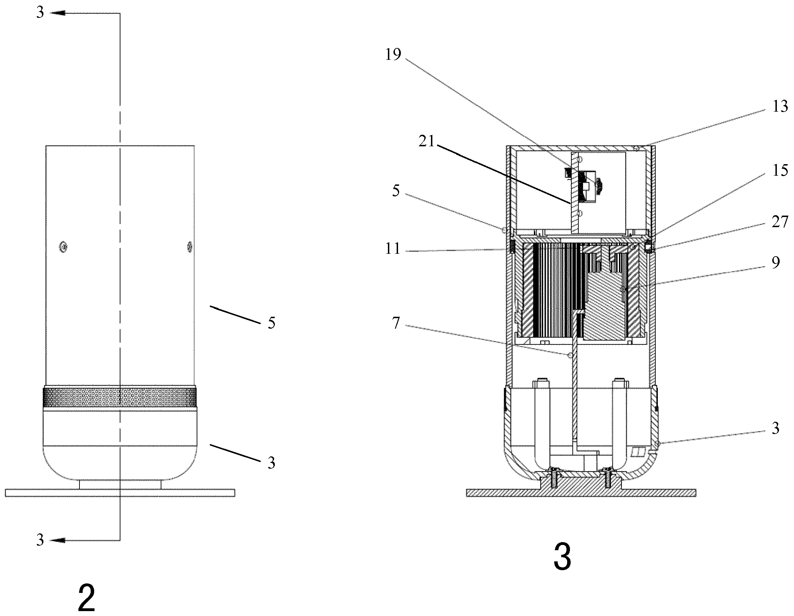

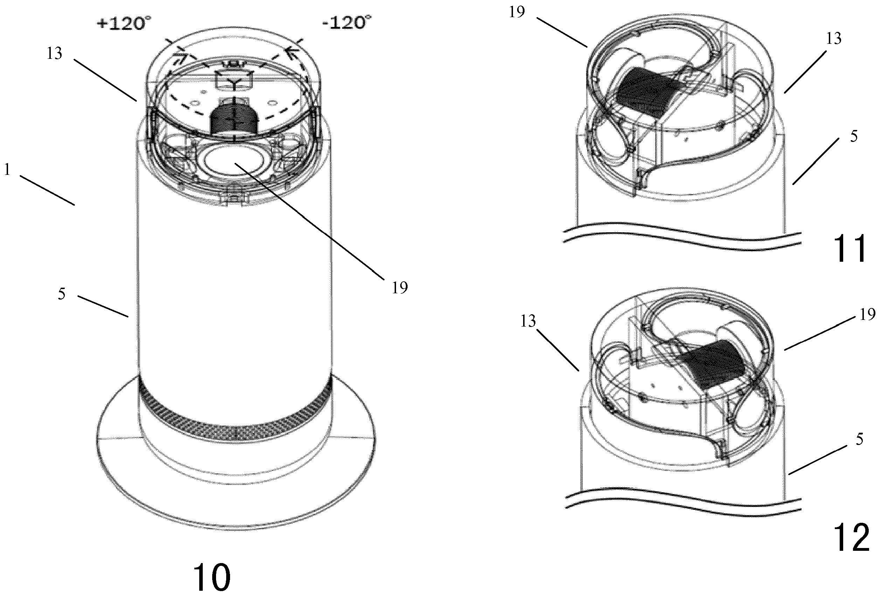

Fig. 2 is a side view of the camera according to the first preferred embodiment of the present invention, wherein the camera head assembly is in a concealed state; fig. 3 is a sectional view along line 3-3 in fig. 2. As shown in fig. 3, when the assembled camera is in the concealed state, with the camera head assembly 13 located in the hollow main body 5, each circular guiding protrusion 29 is received in the corresponding helical groove 25 and is located at an upper end of the helical groove 25, while the external gear 11 is meshed with the internal gear 15 at an upper end of the internal gear 15. As the camera is turned on, the motherboard 21 controls the electric motor 9 to rotate in one direction (e.g. anti-clockwise), and drives the internal gear 15 to rotate by means of the external gear 11, thereby driving the camera head assembly 13 connected in a fixed manner to the internal gear 15 to rotate. During rotation of the camera head assembly 13, the camera head assembly 13 moves upward, due to the guiding of the circular guiding protrusions 29 in the helical grooves 25 located on the outer wall of the lower-half part 17b of the cylindrical housing 17, and gradually extends out of the hollow main body 5. When the circular guiding protrusions 29 guide the rotation of the camera head assembly 13 such that the circular guiding protrusions 29 enter the annular groove 23 from the helical grooves 25, the camera head assembly 13 has already extended completely out of the hollow main body 5 and does not move upward any further. At this time, as the electric motor 9 rotates further, the camera head assembly 13 only rotates horizontally relative to the hollow main body 5, until the camera head assembly 13 rotates horizontally to a predetermined initial position thereof, as shown in fig. 10. The camera head assembly 13 in the initial position shown in fig. 10 can rotate to one side or the other side in a horizontal direction relative to the initial position, under the control of a control instruction from the motherboard 21, in order to acquire a surveillance picture of a target region. Fig. 11 shows schematically in a partial three-dimensional drawing a maximum scanning range when the camera head assembly rotates to one side relative to the predetermined initial position; fig. 12 shows schematically in a partial three-dimensional drawing a maximum scanning range when the camera head assembly rotates to the other side relative to the predetermined initial position. In the examples shown in figs. 11 and 12, supposing the predetermined initial position of the camera head assembly is at a 0° position, then the maximum scanning range of the camera head assembly relative to the predetermined initial position is -120° to +120°. However, it should be understood that the maximum scanning range of the camera head assembly relative to the predetermined initial position may be larger or smaller than -120° to +120°, e.g. -150° to +150° or -100° to +100°.

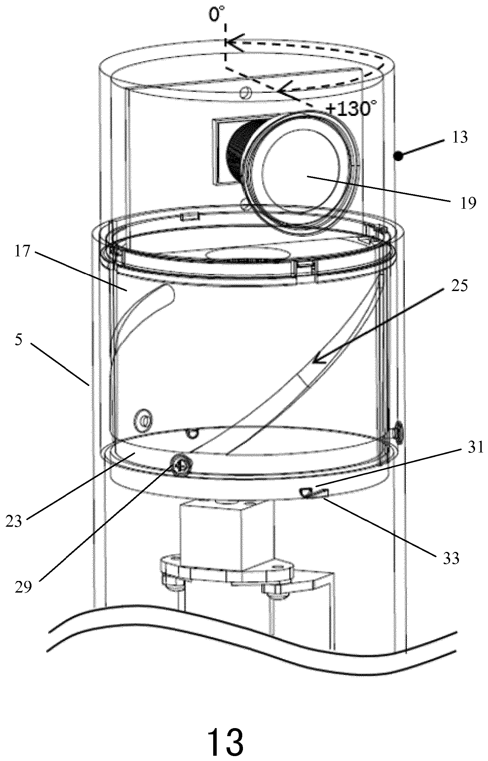

As the camera is turned off, the motherboard 21 controls the electric motor 9 to rotate in another direction (e.g. clockwise), such that the camera head assembly 13 rotates horizontally relative to the hollow main body 5. As the camera head assembly 13 rotates horizontally relative to the hollow main body 5, the positions of the circular guiding protrusions 29 gradually change to positions where the annular groove 23 meets the helical grooves 25. In the case where the maximum scanning range of the camera head assembly relative to the predetermined initial position is set to be -120° to +120°, a setting can be made such that when the camera head assembly 13 rotates horizontally by e.g. +130° relative to the predetermined initial position, the positions of the circular guiding protrusions 29 gradually change to positions where the annular groove 23 meets the helical grooves 25, as shown in fig. 13. It should be understood that the angle of +130° marked in fig. 13 is demonstrative; the angle through which the camera head assembly 13 rotates horizontally relative to the predetermined initial position is generally greater than 120°, and preferably slightly smaller than or greater than +130°. As the electric motor 9 rotates further, the camera head assembly 13 also continues to rotate, and the positions of the circular guiding protrusions 29 will change, from the positions where the annular groove 23 meets the helical grooves 25, to being within the helical grooves 25, guiding the camera head assembly 13 to move gradually downward relative to the hollow main body 5. When the circular guiding protrusions 29 come into contact with the upper ends of the helical grooves 25, the camera head assembly 13 stops rotating, at which time the camera head assembly 13 is in the concealed state, being located within the hollow main body 5.

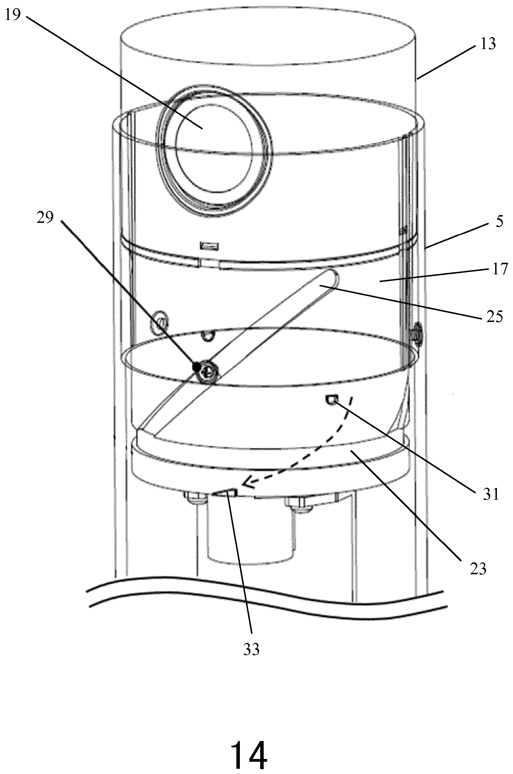

To ensure that the circular guiding protrusions 29 can smoothly enter the helical grooves 25 from the annular groove 23 during rotation of the camera head assembly 13, a pulling protrusion 31 is further disposed on the inner wall of the hollow main body 5, and a sloping protrusion 33 having an inclined face is correspondingly disposed on the outer wall of the lower-half part 17b of the cylindrical housing 17 of the camera head assembly 13. When the circular guiding protrusions 29 are to enter the helical grooves 25 from the annular groove 23, the inclined face of the sloping protrusion 33 on the camera head assembly 13 abuts the pulling protrusion 31 on the inner wall of the hollow main body 5, as shown in fig. 13. As the camera head assembly 13 rotates further, the pulling protrusion 31 exerts a downward action force on the inclined face of the sloping protrusion 33, thereby pulling the camera head assembly 13 to move downward, and thereby causing the circular guiding protrusions 29 to smoothly enter the helical grooves 25 from the annular groove 23. Once the circular guiding protrusions 29 enter the helical grooves 25, the sloping protrusion 33 on the camera head assembly 13 moves away from the pulling protrusion 31 on the inner wall of the hollow main body 5 (as shown in fig. 14), until the camera head assembly 13 moves downward to the concealed state of being within the hollow main body 5.

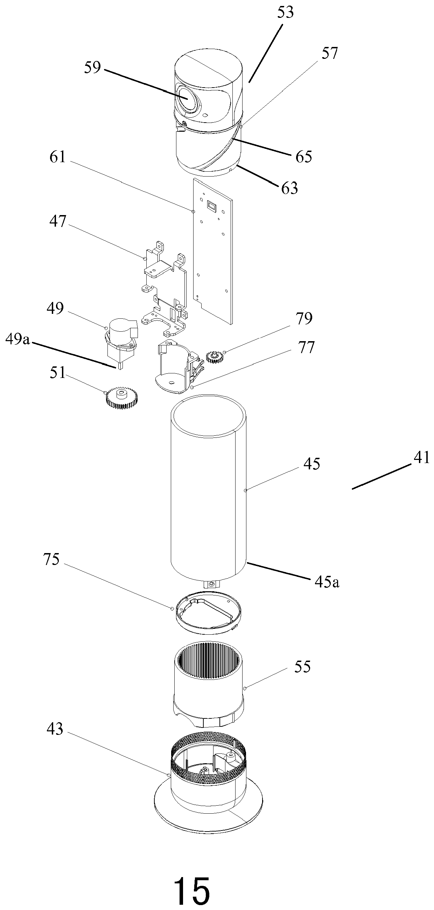

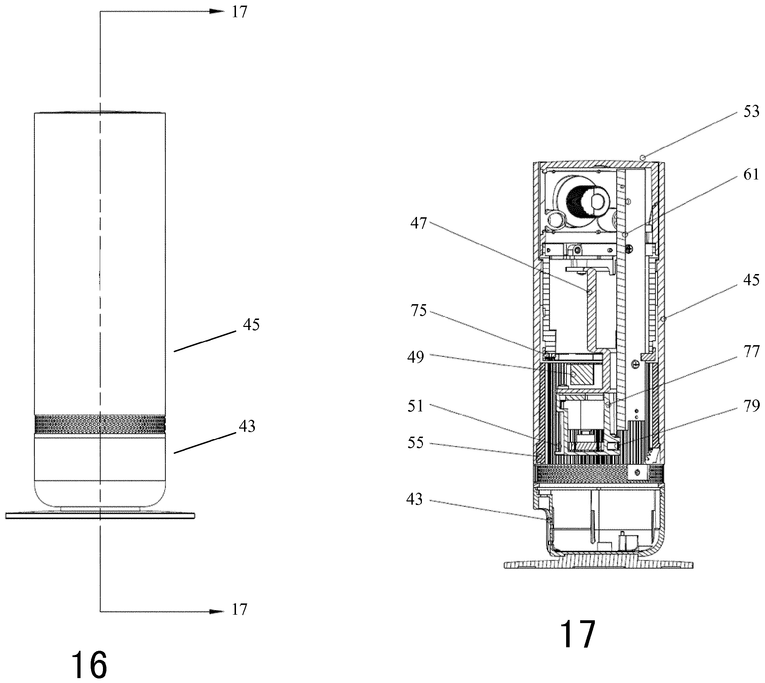

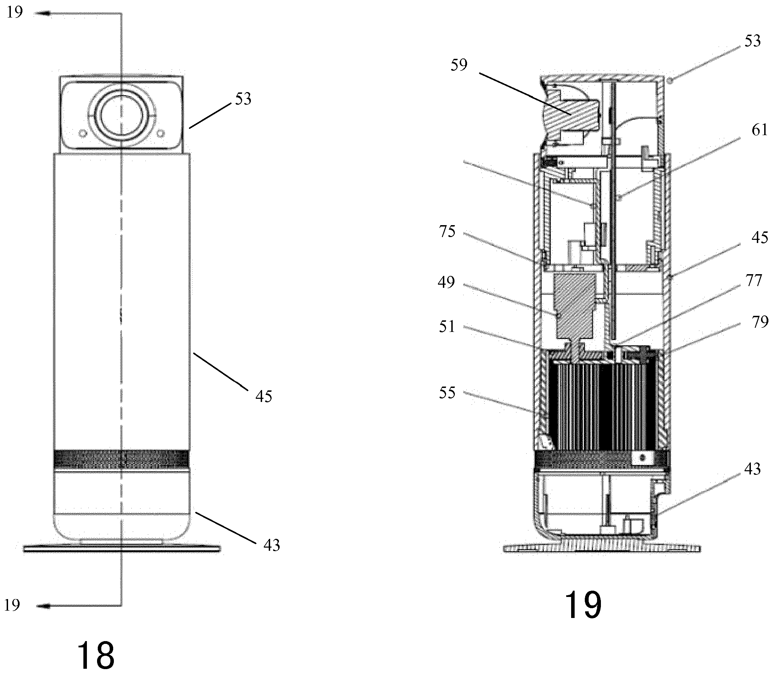

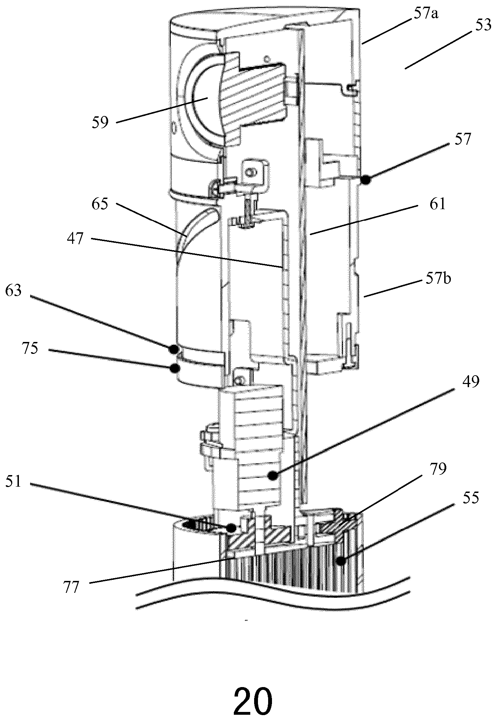

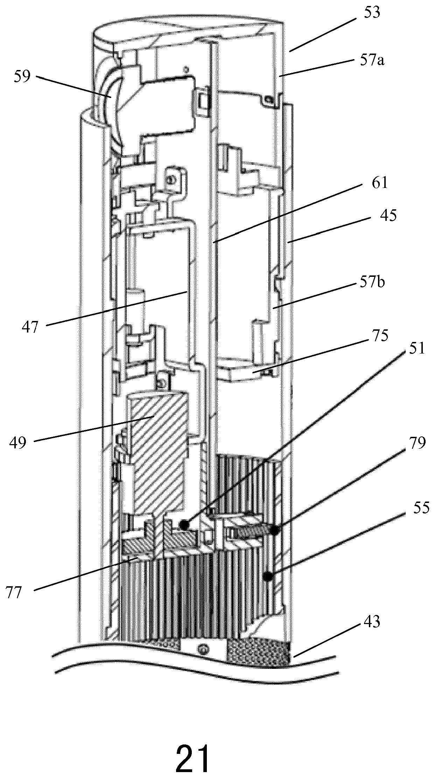

As shown in figs. 15 - 21, a camera 41 according to a second preferred embodiment of the present invention comprises a base 43; a cylindrical hollow main body 45 which, at a lower end 45a, is mounted to the base 43 for example by the mating of screw-threads; a support 47; an electric motor 49 supported on the support 47; an external gear 51 mounted to an output shaft 49a of the electric motor 49; a substantially cylindrical camera head assembly 53; and an internal gear 55 mounted in a fixed manner to the hollow main body 45 and meshed with the external gear 51. Of course, the internal gear 55 could also be mounted to the base 43 in a fixed manner.

In the second preferred embodiment, the camera head assembly 53 further comprises a cylindrical housing 57; a lens module 59 for taking pictures is mounted in an upper-half part 57a of the cylindrical housing 57, and a motherboard 61 for controlling the electric motor 49 and the lens module 59 is mounted at least partially in the upper-half part of the cylindrical housing; a lower-half part 57b of the cylindrical housing 57 is hollow. As in the first embodiment, an annular groove 63 is formed on an outer wall of the lower-half part 57b of the cylindrical housing 57, close to a lower end; a helical groove 65 extending upward from the annular groove 63 is also formed on the outer wall of the lower-half part 57b of the cylindrical housing 57. The camera 41 according to the second preferred embodiment of the present invention further comprises a circular guiding protrusion 69 formed on an inner wall of the hollow main body 45. As in the first embodiment, the camera 41 according to the second preferred embodiment of the present invention may also comprise a pulling protrusion 71 formed on the inner wall of the hollow main body 45, and a sloping protrusion 73 having an inclined face and disposed on the outer wall of the lower-half part 57b of the cylindrical housing 57 of the camera head assembly 53.

Unlike the first preferred embodiment, in the second preferred embodiment, the support 47 supporting the electric motor 49 is fixed to the camera head assembly 53, specifically fixed in the cylindrical housing 57 of the camera head assembly 53, such that the support 47, together with the electric motor 49 supported on the support 47, performs rotational movement and up/down movement with the camera head assembly 53 as an integral whole. To reinforce the supporting of the support 47 and the electric motor 49, the camera head assembly 53 may comprise a base plate 75 fixed to the lower-half part 57b of the cylindrical housing 57. The camera 41 according to the second preferred embodiment of the present invention may further comprise an electric motor shroud 77 mounted to the electric motor 49, and an idler gear 79 meshed with the internal gear 55 may be further mounted on the electric motor shroud 77. When the external gear 51 mounted to the output shaft of the electric motor 49 and the internal gear 55 are driven by the electric motor 49, the idler gear 79 can balance the action forces between the external gear 51 and the internal gear 55, thereby ensuring that the camera head assembly 53 rotates in a more balanced fashion. It should be understood that an idler gear could also be provided in the camera of the first preferred embodiment.

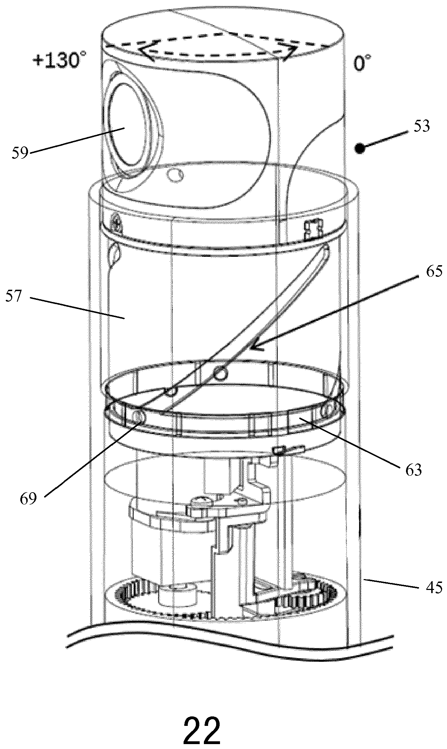

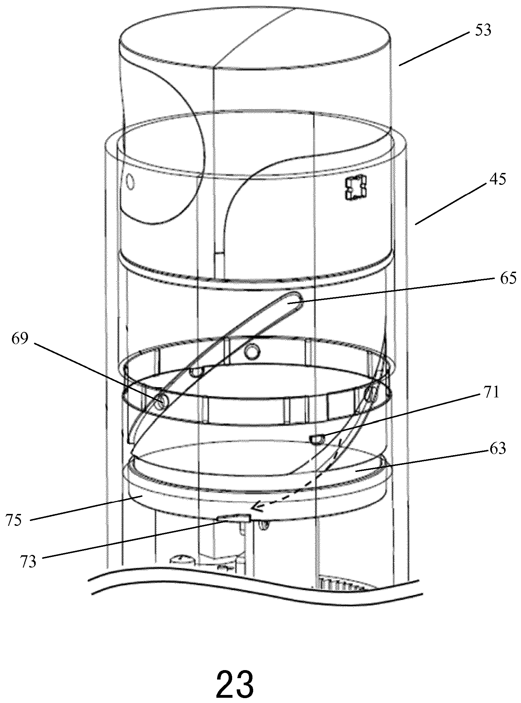

Fig. 22 is a partial three-dimensional drawing of the camera according to the second preferred embodiment of the present invention, wherein the camera head assembly is in an extended state and the hollow main body is shown in a transparent fashion so as to reveal the interior structure of the camera. Fig. 23 is a similar schematic drawing to fig. 22, showing the camera head assembly changing from the extended state to a concealed state. The process of operation of the camera according to the second preferred embodiment of the present invention is substantially identical to the process of operation of the camera according to the first preferred embodiment of the present invention, so is not described in detail.

In the camera according to the present invention, the camera head assembly can be driven by a single electric motor to move up and down and rotate horizontally, making control of the camera simpler; moreover, the single electric motor will significantly reduce the size and cost of the camera.

The present invention is described in detail above with reference to particular embodiments. Clearly, the embodiments described above and shown in the accompanying drawings should all be understood to be demonstrative, without constituting any limitation of the present invention. Those skilled in the art could make various changes in form or amendments to the present invention without departing from the scope thereof; these changes in form or amendments shall not depart from the scope of the present invention.

## Claims

1. Camera (1, 41), comprising:
a base (3, 43);
a cylindrical hollow main body (5, 45) mounted to the base (3, 43);
an electric motor (9, 49) supported on a support (7, 47), with an external gear (11, 51) being mounted on an output shaft of the electric motor;
a camera head assembly (13, 53), being capable of moving up and down relative to the hollow main body (5, 45) and thus having an extended state and a concealed state, and being capable of rotating horizontally in the extended state, the camera head assembly (13, 53) comprising a cylindrical housing (17, 57), a lens module (19, 59) disposed at least partially in the cylindrical housing (17, 57), and a motherboard (21, 61) for controlling the electric motor (9, 49) and the lens module (19, 59); and
an internal gear (15, 55) meshed with the external gear (11, 51);
**characterized in that**
one of the support (7, 47) supporting the electric motor (9, 49) and the internal gear (15, 55) is mounted in a fixed manner to the base (3, 43) and located in the hollow main body (5, 45), and the other one of the support (7, 47) supporting the electric motor (9, 49) and the internal gear (15, 55) is mounted in a fixed manner to the camera head assembly (13, 53); and
an annular groove (23, 63) and at least one helical groove (25, 65) extending upward from the annular groove (23, 63) are formed on an outer wall of a lower-half part of the cylindrical housing (17, 57) of the camera head assembly (13, 53), a corresponding circular guiding protrusion (29, 69) is disposed on an inner wall of the hollow main body (5, 45), and each said circular guiding protrusion (29, 69) is capable of being received in the annular groove (23, 63) or in the corresponding helical groove (25, 65),
a pulling protrusion (31, 71) is formed on the inner wall of the hollow main body (5, 45), a sloping protrusion (33, 73) having an inclined face is formed on the outer wall of the lower-half part of the cylindrical housing (17, 57) of the camera head assembly (13, 53), and when the camera head assembly (13, 53) rotates such that the circular guiding protrusion (29, 69) will enter the helical groove (25, 65) from the annular groove (23, 63), the pulling protrusion (31, 71) applies a downward action force on the inclined face of the sloping protrusion (33, 73), impelling the circular guiding protrusion (29, 69) to enter the helical groove (25, 65) from the annular groove (23, 63), such that up/down movement of the camera head assembly (13, 53) relative to the hollow main body (5, 45) and horizontal rotation of the camera head assembly (13, 53) can be driven by the electric motor (9, 49) alone.

2. Camera (1, 41) according to Claim 1, **characterized in that** the camera (1, 41) further comprises a guide ring (27) mounted in a fixed manner to the inner wall of the hollow main body (5, 45), with the circular guiding protrusion (29, 69) being formed on an inner wall of the guide ring (27); or
the circular guiding protrusion (29, 69) is formed integrally with the inner wall of the hollow main body (5, 45).

3. Camera according to Claim 1, **characterized in that** the support (7) supporting the electric motor (9) is mounted in a fixed manner to the base (3), and the internal gear (15) is mounted in a fixed manner in the cylindrical housing (17) of the camera head assembly (13, 53).

4. Camera (1, 41) according to Claim 1, **characterized in that** the support (7) supporting the electric motor (9) is mounted in a fixed manner to the base (3), and the internal gear (15) is formed integrally with the cylindrical housing (17) of the camera head assembly (13, 53).

5. Camera (1, 41) according to Claim 1, **characterized in that** the support (47) supporting the electric motor (49) is mounted in a fixed manner in the cylindrical housing (57), and the internal gear (55) is mounted in a fixed manner in the hollow main body (5, 45).

6. Camera (1, 41) according to Claim 1, **characterized in that** the support (47) supporting the electric motor (49) is mounted in a fixed manner in the cylindrical housing (57), and the internal gear (55) is formed integrally with the hollow main body (5, 45).

7. Camera according to Claim 1, **characterized in that** the camera (41) further comprises an electric motor shroud (77) mounted to the electric motor (49), and an idler gear (79) meshed with the internal gear (55) is mounted on the electric motor shroud (77), the idler gear (79) balancing action forces between the external gear (51) and the internal gear (55).

8. Camera (1, 41) according to Claim 1, **characterized in that** the at least one helical groove (25, 65) comprises three helical grooves (25, 65) uniformly distributed on the outer wall of the lower-half part of the cylindrical housing (17, 57).

9. Camera (1, 41) according to Claim 1, **characterized in that** the camera is a camera for security surveillance and intelligent household electrical appliances.

## Patentansprüche

1. Kamera (1, 41), umfassend:
einen Fuß (3, 43),
einen zylindrischen hohlen Hauptteil (5, 45), der an den Fuß (3, 43) montiert ist,
einen Elektromotor (9, 49), der auf einem Träger (7, 47) getragen wird, mit einem
Außenzahnrad (11, 51), das an eine Ausgangswelle des Elektromotors montiert ist,
eine Kamerakopfanordnung (13, 53), die geeignet ist, sich relativ zu dem hohlen Hauptteil (5, 45) auf und ab zu bewegen, und somit einen ausgefahrenen Zustand und einen verborgenen Zustand aufweist und geeignet ist, sich in dem ausgefahrenen Zustand horizontal zu drehen, wobei die Kamerakopfanordnung (13, 53) ein zylindrisches Gehäuse (17, 57), ein Linsenmodul (19, 59), das zumindest teilweise in dem zylindrischen Gehäuse (17, 57) angeordnet ist, und eine Hauptplatine (21, 61) zum Steuern des Elektromotors (9, 49) und des Linsenmoduls (19, 59) umfasst,
ein Innenzahnrad (15, 55), das mit dem Außenzahnrad (11, 51) verzahnt ist,
**dadurch gekennzeichnet, dass**
eines von dem Träger (7, 47), der den Elektromotor (9, 49) trägt, und dem Innenzahnrad (15, 55) in einer feststehenden Weise an den Fuß (3, 43) montiert ist und sich in dem hohlen Hauptteil (5, 45) befindet und das andere von dem Träger (7, 47), der den Elektromotor (9, 49) trägt, und dem Innenzahnrad (15, 55) in einer feststehenden Weise an die Kamerakopfanordnung (13, 53) montiert ist, und
an einer Außenwand einer unteren Hälfte des zylindrischen Gehäuses (17, 57) der Kamerakopfanordnung (13, 53) eine ringförmige Nut (23, 63) und mindestens eine spiralförmige Nut (25, 65), die sich von der ringförmigen Nut (23, 63) aufwärts erstreckt, gebildet sind, wobei an einer Innenwand des hohlen Hauptteils (5, 45) ein entsprechender kreisförmiger Führungsvorsprung (29, 69) angeordnet ist und der kreisförmige Führungsvorsprung (29, 69) jeweils geeignet ist, in der ringförmigen Nut (23, 63) oder der entsprechenden spiralförmigen Nut (25, 65) aufgenommen zu sein,
an der Innenwand des hohlen Hauptteils (5, 45) ein ziehender Vorsprung (31, 71) gebildet ist, an der Außenwand der unteren Hälfte des zylindrischen Gehäuses (17, 57) der Kamerakopfanordnung (13, 53) ein schräg verlaufender Vorsprung (33, 73) mit einer schrägen Fläche gebildet ist und, wenn sich die Kamerakopfanordnung (13, 53) derart dreht, dass der kreisförmige Führungsvorsprung (29, 69) von der ringförmigen Nut (23, 63) in die spiralförmige Nut (25, 65) eintritt, der ziehende Vorsprung (31, 71) eine nach unten wirkende Kraft auf die schräge Fläche des schräg verlaufenden Vorsprungs (33, 73) ausübt, was den kreisförmigen Führungsvorsprung (29, 69) zwingt, von der ringförmigen Nut (23, 63) in die spiralförmige Nut (25, 65) einzutreten, so dass eine Auf- und Abbewegung der Kamerakopfanordnung (13, 53) relativ zum hohlen Hauptteil (5, 45) und eine horizontale Drehung der Kamerakopfanordnung (13, 53) allein von dem Elektromotor (9, 49) angetrieben werden können.

2. Kamera (1, 41) nach Anspruch 1, **dadurch gekennzeichnet, dass** die Kamera (1, 41) ferner einen Führungsring (27) umfasst, der in einer feststehenden Weise an die Innenwand des hohlen Hauptteils (5, 45) montiert ist, wobei der kreisförmige
Führungsabschnitt (29, 69) an einer Innenwand des Führungsrings (27) gebildet ist, oder
der kreisförmige Führungsvorsprung (29, 69) einstückig mit der Innenwand des hohlen Hauptteils (5, 45) gebildet ist.

3. Kamera nach Anspruch 1, **dadurch gekennzeichnet, dass** der Träger (7), der den Elektromotor (9) trägt, in einer feststehenden Weise an dem Fuß (3) befestigt ist und das Innenzahnrad (15) in einer feststehenden Weise in das zylindrische Gehäuse (17) der Kamerakopfanordnung (13, 53) montiert ist.

4. Kamera (1, 41) nach Anspruch 1, **dadurch gekennzeichnet, dass** der Träger (7), der den Elektromotor (9) trägt, in einer feststehenden Weise an dem Fuß (3) befestigt ist und das Innenzahnrad (15) einstückig mit dem zylindrischen Gehäuse (17) der Kamerakopfanordnung (13, 53) gebildet ist.

5. Kamera (1, 41) nach Anspruch 1, **dadurch gekennzeichnet, dass** der Träger (47), der den Elektromotor (49) trägt, in einer feststehenden Weise in das zylindrische Gehäuse (57) montiert ist und das Innenzahnrad (55) in einer feststehenden Weise in den hohlen Hauptteil (5, 45) montiert ist.

6. Kamera (1, 41) nach Anspruch 1, **dadurch gekennzeichnet, dass** der Träger (47), der den Elektromotor (49) trägt, in einer feststehenden Weise in das zylindrische Gehäuse (57) montiert ist und das Innenzahnrad (55) einstückig mit dem hohlen Hauptteil (5, 45) gebildet ist.

7. Kamera nach Anspruch 1, **dadurch gekennzeichnet, dass** die Kamera (41) ferner ein Elektromotorschutzblech (77) umfasst, das an den Elektromotor (49) montiert ist, und ein Zwischenrad (79), das mit dem Innenzahnrad (55) verzahnt ist, an das Elektromotorschutzblech (77) montiert ist, wobei das Zwischenrad (79) zwischen dem Außenzahnrad (51) und dem Innenzahnrad (55) wirkende Kräfte ausgleicht.

8. Kamera (1, 41) nach Anspruch 1, **dadurch gekennzeichnet, dass** die mindestens eine spiralförmige Nut (25, 65) drei spiralförmige Nuten (25, 65) umfasst, die gleichmäßig auf der Außenwand der unteren Hälfte des zylindrischen Gehäuses (17, 57) verteilt sind.

9. Kamera (1, 41) nach Anspruch 1, **dadurch gekennzeichnet, dass** die Kamera eine Kamera zur Sicherheitsüberwachung und für intelligente elektrische Haushaltsgeräte ist.

## Revendications

1. Caméra (1, 41), comportant :
une base (3, 43) ;
un corps principal creux cylindrique (5, 45) monté sur la base (3, 43) ;
un moteur électrique (9, 49) soutenu sur un support (7, 47), doté d'un engrenage externe (11, 51) qui est monté sur un arbre de sortie du moteur électrique ;
un ensemble (13, 53) de tête de caméra, capable de monter et descendre par rapport au corps principal creux (5, 45) et possédant ainsi un état déployé et un état dissimulé, et capable de tourner horizontalement dans l'état déployé, l'ensemble (13, 53) de tête de caméra comportant un boîtier cylindrique (17, 57), un module (19, 59) d'objectif disposé au moins partiellement dans le boîtier cylindrique (17, 57), et
une carte mère (21, 61) servant à commander le moteur électrique (9, 49) et le module (19, 59) d'objectif ;
et
un engrenage interne (15, 55) en prise avec l'engrenage externe (11, 51) :
**caractérisée en ce que**
un élément parmi le support (7, 47) soutenant le moteur électrique (9, 49) et l'engrenage interne (15, 55) est monté de manière fixe sur la base (3, 43) et situé dans le corps principal creux (5, 45), et l'autre élément parmi le support (7, 47) soutenant le moteur électrique (9, 49) et l'engrenage interne (15, 55) est monté de manière fixe sur l'ensemble (13, 53) de tête de caméra ;
et
une rainure annulaire (23, 63) et au moins une rainure hélicoïdale (25, 65) s'étendant vers le haut à partir de la rainure annulaire (23, 63) sont formées sur une paroi extérieure d'une partie de moitié inférieure du boîtier cylindrique (17, 57) de l'ensemble (13, 53) de tête de caméra, une protubérance circulaire (29, 69) de guidage correspondante est disposée sur une paroi intérieure du corps principal creux (5, 45), et chacune desdites protubérances circulaires (29, 69) de guidage est susceptible d'être reçue dans la rainure annulaire (23, 63) ou dans la rainure hélicoïdale (25, 65) correspondante,
une protubérance (31, 71) de traction est formée sur la paroi intérieure du corps principal creux (5, 45), une protubérance (33, 73) en pente présentant une face inclinée est formée sur la paroi extérieure de la partie de moitié inférieure du boîtier cylindrique (17, 57) de l'ensemble (13, 53) de tête de caméra, et
lorsque l'ensemble (13, 53) de tête de caméra tourne de telle façon que la protubérance circulaire (29, 69) de guidage pénètre dans la rainure hélicoïdale (25, 65) à partir de la rainure annulaire (23, 63), la protubérance (31, 71) de traction applique une force d'action vers le bas sur la face inclinée de la protubérance (33, 73) en pente, poussant la protubérance circulaire (29, 69) de guidage à pénétrer dans la rainure hélicoïdale (25, 65) à partir de la rainure annulaire (23, 63), de telle façon qu'un mouvement haut/bas de l'ensemble (13, 53) de tête de caméra par rapport au corps principal creux (5, 45) et
une rotation horizontale de l'ensemble (13, 53) de tête de caméra puissent être entraînés par le moteur électrique (9, 49) seul.

2. Caméra (1, 41) selon la revendication 1, **caractérisée en ce que** la caméra (1, 41) comporte en outre une bague (27) de guidage montée de manière fixe sur la paroi intérieure du corps principal creux (5, 45), la protubérance circulaire (29, 69) de guidage étant formée sur une paroi intérieure de la bague (27) de guidage ; ou
la protubérance circulaire (29, 69) de guidage étant formée d'un seul tenant avec la paroi intérieure du corps principal creux (5, 45).

3. Caméra selon la revendication 1, **caractérisée en ce que** le support (7) soutenant le moteur électrique (9) est monté de manière fixe sur la base (3), et **en ce que** l'engrenage interne (15) est monté de manière fixe dans le boîtier cylindrique (17) de l'ensemble (13, 53) de tête de caméra.

4. Caméra (1, 41) selon la revendication 1, **caractérisée en ce que** le support (7) soutenant le moteur électrique (9) est monté de manière fixe sur la base (3), et **en ce que** l'engrenage interne (15) est formé d'un seul tenant avec le boîtier cylindrique (17) de l'ensemble (13, 53) de tête de caméra.

5. Caméra (1, 41) selon la revendication 1, **caractérisée en ce que** le support (47) soutenant le moteur électrique (49) est monté de manière fixe dans le boîtier cylindrique (57), et **en ce que** l'engrenage interne (55) est monté de manière fixe dans le corps principal creux (5, 45).

6. Caméra (1, 41) selon la revendication 1, **caractérisée en ce que** le support (47) soutenant le moteur électrique (49) est monté de manière fixe dans le boîtier cylindrique (57), et **en ce que** l'engrenage interne (55) est formé d'un seul tenant avec le corps principal creux (5, 45).

7. Caméra selon la revendication 1, **caractérisée en ce que** la caméra (41) comporte en outre un capot (77) de moteur électrique monté sur le moteur électrique (49), et **en ce qu'**un pignon intermédiaire (79) en prise avec l'engrenage interne (55) est monté sur le capot (77) de moteur électrique, le pignon intermédiaire (79) équilibrant des forces d'action entre l'engrenage externe (51) et l'engrenage interne (55).

8. Caméra (1, 41) selon la revendication 1, **caractérisée en ce que** la ou les rainures hélicoïdales (25, 65) comportent trois rainures hélicoïdales (25, 65) réparties uniformément sur la paroi extérieure de la partie de moitié inférieure du boîtier cylindrique (17, 57) .

9. Caméra (1, 41) selon la revendication 1, **caractérisée en ce que** la caméra est une caméra destinée à la surveillance de sécurité et à des appareils électroménagers intelligents.
